# EUROPÄISCHE PATENTSCHRIFT

(11) **EP 0 865 585 B1**
(45) Veröffentlichungstag und Bekanntmachung des Hinweises auf die Patenterteilung: **26.06.2002**
(21) Anmeldenummer: 96945897.5
(22) Anmeldetag: 25.11.1996
(51) Int. Cl.: F16J 15/44

(54) **ANORDNUNG ZUR ABDICHTUNG EINES DURCHFÜHRUNGSSPALTES ZWISCHEN EINER WAND UND EINER WELLE**
ARRANGEMENT FOR SEALING A PASSAGE BETWEEN A WALL AND A SHAFT
SYSTEME POUR ETANCHEIFIER UNE FENTE DE PASSAGE ENTRE UNE PAROI ET UN ARBRE

(30) Priorität: 08.12.1995 DE 19545732
(43) Veröffentlichungstag der Anmeldung: 23.09.1998
(73) Patentinhaber: SIEMENS AKTIENGESELLSCHAFT, 80333 München (DE)
(72) Erfinder: LONGREE, Alexander, D-45481 Mülheim an der Ruhr (DE)
(86) Internationale Anmeldenummer: DE9602263
(87) Internationale Veröffentlichungsnummer: WO9721948

(56) Entgegenhaltungen:
- WO-A-92/02747
- DE-A- 3 712 943
- DE-A- 3 723 729
- US-A- 4 076 259

## Beschreibung

Die Erfindung betrifft eine Anordnung zur Abdichtung eines Durchführungsspaltes zwischen einer Wand und einer durch diese hindurchgeführten sowie relativ zu dieser in Rotation versetzbaren Welle, mit einem Dichtring, durch den die Welle hindurchführbar ist, sowie einem mit der Wand fest verbindbaren Halter mit einer zylindrischen Ausnehmung und einer sich in diese eröffnenden Nut mit einer ersten Nutflanke und einer zweiten Nutflanke, zwischen denen der Dichtring gehaltert ist, wobei in der Nut eine den Dichtring umringende und mit Öl befüllbare Kammer verbleibt.

Eine solche Anordnung findet beispielsweise Anwendung an einer mit Wasserstoff gefüllten elektrischen Maschine, in welcher der Wasserstoff insbesondere zu Kühlzwecken dient. Die Anordnung wird dabei als Teil eines Dichtsystems eingesetzt, um eine Durchführung einer in Rotation versetzbaren Welle durch ein feststehendes Gehäuse der Maschine abzudichten und ein Entweichen von Wasserstoff in die Umgebung der Maschine zu verhindern. Von besonderer Bedeutung ist die Anwendung der Anordnung an einem großen Turbogenerator, der allein mit Wasserstoff oder mit Wasserstoff und Wasser gekühlt wird. Ein solcher Turbogenerator hat üblicherweise eine Leistungsabgabe von 500 MVA oder mehr; er hat ein abgedichtetes Gehäuse, in dem der Wasserstoff unter einem Druck von 10⁵ Pa bis 10⁶ Pa steht.

Eine Anordnung der eingangs geschilderten Art geht hervor aus der DE 37 23 729 A1 (dem Oberbegriff des Anspruchs 1 entsprechend) oder der GB 0 760 781 A. Diese Dokumente demonstrieren auch Möglichkeiten der Weiterbildung einer solchen Anordnung. Das erstgenannte Dokument betrifft die Anordnung des Dichtrings auf einer Gehäusewand, wobei der Dichtring relativ zur Gehäusewand nicht drehbar, zum Zwecke der Zentrierung jedoch leicht verschiebbar sein soll. Er ist hierzu nicht in einer Kammer angeordnet sondern zwischen der Wand und einer Befestigungsplatte durch Befestigungsbolzen gehaltert. Durch die Wand hindurch sind Zuleitungen für Öl vorgesehen, welchen jeweils eine Leitungsfortführung in dem Dichtring zugeordnet ist. Jede Leitungsfortführung mündet in eine entsprechende, der abzudichtenden Welle zugeordneten Ringnut in dem Dichtring. Weiterhin findet zumindest in begrenztem Maße ein Ölleckstrom zwischen dem Dichtring und der Wand sowie zwischen Dichtring und der Befestigungsplatte statt. Durch ein Dichtmittel, eine Lippendichtung, wird verhindert, daß größere Mengen von Öl durch einen Spalt zwischen der Wand des Generatorgehäuses und dem Dichtring abfließen. Der Druck im Inneren des Generators sowie der Öldruck belasten den Dichtungsring und drücken ihn gegen die Befestigungsplatte. Um einen Ausgleich zu schaffen sowie in Spalten zwischen dem Dichtungsring und der Befestigungsplatte die Reibung zu verringern, sind in der Befestigungsplatte Entlastungs-Öl-Ringnuten vorgesehen, denen Öl zuführbar ist. Das zweitgenannte Dokument stellt insbesondere Möglichkeiten zur Zuführung von Öl oder anderer Flüssigkeit zu Dicht- und/oder Schmierzwecken zu Spalten zwischen dem Dichtring, der Wand und der Welle vor.

In der DE 37 12 943 A1 (dem Oberbegriff des Anspruchs 3 entsprechend) ist eine Wellendichtung für wasserstoffgekühlte Turbogeneratoren beschrieben. Diese weist eine in einer Kammer radial bewegliche Dichtungsanordnung mit zwei die Welle umschließenden Dichtungsringen auf, wobei zumindest einer der Dichtungsringe axial beweglich ist. Durch eine radiale Zuleitung, welche entweder durch einen Dichtring geführt ist oder zwischen den beiden Dichtringen verläuft, wird Dichtöl von der Kammer zu der zu dichtenden Welle geführt. Zumindest der zweite Dichtring weist eine radiale Leitung auf, welche strömungstechnisch mit einem Sammelraum oder einer Sacklochbohrung angeordnet in einer Flanke der Kammer verbunden ist. Hierdurch wird ein Teil des Dichtölstroms in Richtung Generator-Innengehäuse abgezweigt und zurückgeführt.

Die CH-PS 626 694 behandelt eine Wellendichtung, insbesondere für große Verdichterwellen. Zwischen der abzudichtenden Welle und einem Dichtungskolben verbleibt ein Ringspalt. Der Strömungsmitteldurchtritt durch diesen Ringspalt soll möglichst klein gehalten und gedrosselt werden, indem eine Kolbeninnenwandung des Dichtungskolbens mit einer eingeschnittenen schraubenlinienförmigen Nut versehen ist. Diese bildet eine Labyrinth-Dichtung, welche bei Drehung der Welle mit dieser zusammen eine Pumpwirkung ergibt, die verhindert, daß Dichtungsöl in das Verdichterinnere eindringt.

Wenn bei der Konstruktion eines neuen Turbogenerators eine Welle mit größer werdendem Durchmessern in Betracht gezogen wird, so ergibt sich ein Problem daraus, daß die Abmessungen der Spalte, durch die Wasserstoff entlang der Welle aus dem Gehäuse des Turbogenerators lecken könnte, mit dem Durchmesser der Welle anwachsen. Mit steigenden Anforderungen an die Abdichtung des Turbogenerators ergibt sich daraus ein vervielfältigtes Bedürfnis, die Dichtwirkung einer Anordnung der eingangs genannten Art zu verbessern. Vielfach wird eine entsprechende Anordnung daher oft in der Weise ausgestaltet, daß sie zwei entlang der Welle hintereinander liegende Kreisläufe für dichtendes Öl hat; ein dem Inneren des Gehäuses zugewandter Kreislauf soll dabei eventuelle Leckagen an Wasserstoff weitgehend aufnehmen, und ein dem äußeren des Gehäuses zugewandter Kreislauf soll sicherstellen, daß keine Luft ins Gehäuse eindringen kann. Der zum Betrieb einer solcherart ausgebildeten Anordnung notwendige Aufwand ist sehr hoch, und es hat sich dementsprechend das Bedürfnis ergeben, eine Anordnung der eingangs genannten Art so auszugestalten, daß sie mit einem einzigen Kreislauf für abdichtendes Öl betrieben werden kann.

Aus der EP 0 542 751 B1, korrespondierend zum US-Patent 5,233,862, geht eine Anordnung zur Abdichtung eines Durchführungsspaltes zwischen einer Gehäusewand und einer durch diese hindurchgeführten sowie relativ zu dieser in Rotation versetzbaren Welle hervor. Bei dieser Anordnung ist der Dichtring, der ohne mitzurotieren auf der rotierenden Welle gleitet, auf seine Funktion überwachbar. Dazu wird ein Drehmoment gemessen, welches die rotierende Welle auf den Dichtring ausübt. Überschreitet dieses Drehmoment eine gewisse Grenze, so muß davon ausgegangen werden, daß eine einwandfreie Schmierung des auf der Welle gleitenden Dichtrings nicht mehr gewährleistet ist und sich ein Problem anbahnt.

Zukünftig kann erwartet werden, daß ein zunehmender Druck auf die am Markt erzielbaren Preise eine Vereinfachung und Verbilligung der dynamoelektrischen Großmaschinen erfordert, wobei eine betrieblich in Kauf zu nehmende Leckage von Wasserstoff aus einer mit Wasserstoff gefüllten dynamoelektrischen Maschine unter Gesichtspunkten des Umweltschutzes und der Sicherheit zunehmend weniger toleriert wird. Daraus ergibt sich der Wunsch, in einem Dichtsystem der in der Einleitung beschriebenen Art die Beladung des eingesetzten Öls mit Wasserstoff, die sich notwendigerweise dann ergibt, wenn das Öl mit dem Wasserstoff in Kontakt kommt, auf ein Minimum zu reduzieren. Wasserstoff, der in Öl eingedrungen ist, kann nicht oder nur unter erheblichem Reinigungsaufwand zurückgewonnen und zu der elektrischen Maschine zurückgeführt werden, und ein Verlust zumindest eines Teils dieses Wasserstoffs läßt sich kaum irgendwie vermeiden.

In diesem Zusammenhang ist festzustellen, daß in einem Dichtsystem, das in vorstehend beschriebener Weise zwei Kreisläufe für das zur Abdichtung verwendete Öl aufweist, stets mit einem erheblichen Eintrag von Wasserstoff in zumindest einen der Kreisläufe zu rechnen ist. Die im vorigen Absatz angeführten Erwägungen lassen daher wünschen, von solchen Dichtsystemen in Zukunft abzusehen und auf Dichtsysteme mit jeweils einem einzigen Kreislauf für das Öl auszukommen.

In Ansehung all dessen liegt der Erfindung die Aufgabe zugrunde, eine Anordnung zur Abdichtung eines Durchführungsspaltes zwischen einer Wand und einer durch diese hindurchgeführten sowie relativ zu dieser in Rotation versetzbaren Welle anzugeben, wobei ein Eintrag von Wasserstoff aus einem mit Wasserstoff gefüllten Gehäuse in Öl, welches diese Anordnung durchströmt, so weit wie möglich vermieden wird.

Zur Lösung dieser Angabe angegeben wird eine Anordnung zur Abdichtung eines Durchführungsspaltes zwischen einer Wand und einer durch diese hindurchgeführten sowie relativ zu dieser in Rotation versetzbaren Welle, mit einem Dichtring, durch den die Welle hindurchführbar ist, sowie einem mit der Wand fest verbindbaren Halter mit einer zylindrischen Ausnehmung und einer sich in diese eröffnenden Nut mit einer ersten Nutflanke und einer zweiten Nutflanke, zwischen denen der Dichtring gehaltert ist, wobei in der Nut eine den Dichtring umgebende und mit Öl befüllbare Kammer verbleibt, der Dichtring zumindest eine Leitung enthält, durch welche Öl aus der Kammer zu einer der Wellen zuzuwendenden Dichtfläche leitbar ist und eine Ringdichtung vorgesehen ist, welche in einer in die erste Nutflanke eingelassenen Ringnut gehaltert ist, und die Ringnut über eine Stichnut mit der Kammer kommuniziert. Die Dichtung besteht vorzugsweise aus einem Material mit geringem Reibungskoeffizienten, insbesondere Teflon.

Eine solche Anordnung wird in einem Dichtsystem für eine elektrische Maschine derart eingesetzt, daß die erste Nutflanke dem Inneren des Gehäuses zugewandt ist, so daß an dieser ersten Nutflanke der gegen das Äußere des Gehäuses abzuschirmende Wasserstoff anliegt. Die Kammer wird mit dem zur Abdichtung dienenden Öl befüllt. Das Öl dringt in die vorhandene Radialspalte zwischen dem Halter und dem Dichtring ein. Dadurch, daß der Radialspalt durch die Ringdichtung an der ersten Nutflanke gegen einen Durchfluß des Öls gesperrt ist, kann Öl aus einem Radialspalt nicht mehr bis zum Inneren des Gehäuses vordringen und sich dadurch mit Wasserstoff sättigen, wie dies in den Anordnungen gemäß den Lehren des Standes der Technik stets der Fall war. Die Ringdichtung wird durch Öl, welches aus der Kammer durch die Stichleitung und die Ringnut auf die Ringdichtung einwirkt, auf den Dichtring gedrückt wird. Hierdurch wird die Menge an in den Generator strömenden Öls deutlich verringert, wobei der apparative Aufwand recht gering bleibt und insbesondere lediglich konstruktive Maßnahmen in der unmittelbaren Umgebung des Dichtrings erforderlich sind.

Erfindungsgemäß enthält in einer Anordnung gemäß Patentanspruch 3 der Dichtring in der Dichtfläche zwischen der Leitung und einer der ersten Nutflanke unmittelbar zugewandten Flanke eine Ableitung sowie eine Sammelkammer, wobei die Sammelkammer aus der zweiten Ringnut mit Öl beaufschlagbar ist. Die Sammelkammer ist weiterhin vorzugsweise anschließbar an eine Abfuhr für das in ihr anfallende Öl. Im Rahmen einer solchen Ausgestaltung kann Öl, welches sich an der Dichtfläche durch Reibung zwischen dem Dichtring und der rotierenden Welle erhitzt hat, in die Sammelkammer eintreten und dort den Dichtring aufheizen. So entsteht eine wesentlich gleichmäßigere Erwärmung des Dichtrings, als es ohne eine solche Ausgestaltung der Fall sein könnte. Dies verhindert zunächst das Entstehen thermischer Spannungen in dem Dichtring; vor allem aber kann der Dichtring auf diese Weise einer ebenfalls durch Aufheizung bedingten Ausdehnung der Welle folgen, indem er sich selbst ausdehnt. Ein Spalt zwischen dem Dichtring und der Welle kann somit sowohl in kaltem als auch in betriebswarmem Zustand relativ klein gehalten werden; es ist nicht mehr erforderlich, den Dichtring so zu dimensionieren, daß er seinerseits in noch kaltem Zustand einen Abstand zur betriebswarmen Welle einhält, was bedeutet, daß der Spalt zwischen dem Dichtring und der Welle in kaltem Zustande recht groß sein muß und somit zur Abdichtung einen sehr hohen Durchfluß an Öl erfordert. Somit ist hierdurch eine deutliche Verringerung der in den Generator einströmenden Dichtölmenge erreicht.

Bei Durchfluß von Öl durch die Leitung kann ein Spalt zwischen der Welle und dem Dichtring, welcher Spalt an der Seite des Dichtrings von der erwähnten Dichtfläche begrenzt wird, vollständig mit Öl gefüllt und somit gegen einen Durchfluß von Wasserstoff sicher gesperrt werden. Bevorzugt mündet die Leitung in eine Ringnut in der Dichtfläche des Dichtrings, da hierdurch eine gleichmäßige Verteilung des Öls sichergestellt ist. Bevorzugt erfolgt eine Abfuhr von Öl zwischen Welle und Dichtring über eine zweite Ringnut im Dichtring, die mit der Ableitung verbunden ist.

Um im Rahmen der vorstehend beschriebenen Ausgestaltungen der Anordnung den Abfluß von Öl entlang der Dichtfläche des Dichtrings in einer Richtung zur ersten Nutflanke hin zu begrenzen, weist die Dichtfläche zwischen der Ringnut und einer Flanke des Dichtrings, die unmittelbar an der ersten Nutflanke anliegt, bevorzugtermaßen eine schraubenförmig die Dichtfläche umlaufende Rille auf. Diese Rille ist zweckmäßigerweise so orientiert, daß Öl, welches sich in der Rille befindet, von der rotierenden Welle zur Ringnut hin gefördert wird. In diesem Falle prägt die rotierende Welle dem Öl in der Rille einen zur Ringnut hin gerichteten Impuls auf, welcher einen übermäßigen Abfluß des Öls von der Ringnut weg und zur ersten Nutflanke hin entgegenwirkt.

Ebenfalls bevorzugt ist es, daß der Dichtring an einer Flanke, die unmittelbar an der ersten Nutflanke anliegt, einen die Dichtfläche verlängernden Ringansatz trägt. Durch die Verlängerung der Dichtfläche wird auch der Spalt zwischen der Ringnut und der erwähnten Flanke des Dichtrings verlängert. Dies erhöht den Widerstand, den der Spalt durchfließendem Öl entgegensetzt, und begrenzt ebenfalls den Abfluß von Öl entlang der Dichtfläche.

Außerdem bevorzugt ist es, daß die zweite Nutflanke, dies ist diejenige Nutflanke, die bei einem Einsatz der Anordnung in einer mit Wasserstoff gefüllten elektrischen Maschine dem Äußeren des Gehäuses zuzuwenden wäre, eine mit Öl beaufschlagbare Ringnut aufweist. Während des Betriebs der Anordnung wird diese Ringnut mit Öl beaufschlagt, welches unter einem derart hohen Druck steht, daß es auf den Dichtring eine Kraft ausübt, die der gemäß üblicher Praxis unter erhöhtem Druck stehende Wasserstoff im Inneren des Gehäuses auf den Dichtring ausübt. Hierdurch wird der Dichtring im wesentlichen kräftefrei gehaltert, was für den Betrieb und die Funktion des Dichtrings günstig ist.

Eine weitere besonders bevorzugte Ausgestaltung zeichnet sich dadurch aus, daß in der ersten Nutflanke eine Ringnut vorgesehen ist, an die eine Abfuhr zur Abführung von Öl aus dem entsprechenden Radialspalt anschließbar ist. Hierbei erfolgt ein Durchfluß von Öl durch den Radialspalt an der ersten Nutflanke, wobei solches durchfließendes Öl allerdings nicht bis zur Welle und somit ins Innere des Gehäuses gelangen, sondern es vorher abgeführt wird. Dieses Öl kann sich somit nicht in wesentlichem Umfang mit Wasserstoff beladen, so daß auch auf diese Weise die gestellte Aufgabe gelöst wird. Einem gegebenenfalls erhöhten apparativen Aufwand steht ein durchaus interessanter Vorteil gegenüber, nämlich die Möglichkeit, den Betrieb des Dichtrings beeinflussen und die Abführung des Öls aus dem Radialspalt an der ersten Nutflanke steuern zu können.

Die Anordnung jedweder Ausgestaltung ist vorzugsweise eingefügt in ein Dichtsystem an einer elektrischen Maschine, insbesondere an einem mit Wasserstoff gefülltem Turbogenerator. Die Anordnung begrenzt den Übertritt von Wasserstoff in das Öl, da sie zumindest eine Stelle, an der ein Zufluß von Öl ins Innere der abgedichteten Maschine nicht unbedingt notwendig ist, gegen einen Durchfluß von Öl sperrt. Es wird somit eine Leckage von Wasserstoff in bedeutendem Umfang vermieden, was die Erfüllung einschlägiger Betriebsvorschriften wesentlich erleichtert.

Das Dichtsystem beinhaltet vorzugsweise nur einen einzigen Kreislauf für das Öl.

Ausführungsbeispiele der Erfindung sowie deren Unterschiede zum Stand der Technik werden nunmehr anhand der Zeichnung erläutert. Es wird nicht geltend gemacht, daß die Zeichnung bestimmte Ausführungsbeispiele maßstabsgerecht darstelle. Ergänzende Hinweise zur Realisierung eines Ausführungsbeispiels sind dem einschlägigen Stand der Technik zu entnehmen. Jede Figur der Zeichnung zeigt einen Längsschnitt durch die jeweilige Ausführungsform, gelegt entlang einer Achse einer Welle, deren Durchführung durch ein Gehäuse abgedichtet werden soll.

Im einzelnen zeigen:
- Figur 1: eine erste Ausführungsform der Anordnung;
- Figur 2: eine Ausführungsform gemäß dem Stand der Technik;
- Figur 3: eine zweite Ausführungsform der Anordnung;
- Figur 4, 5 und 6: Weiterbildungen der Erfindung, dargestellt in Verbindung mit der ersten Ausführungsform.

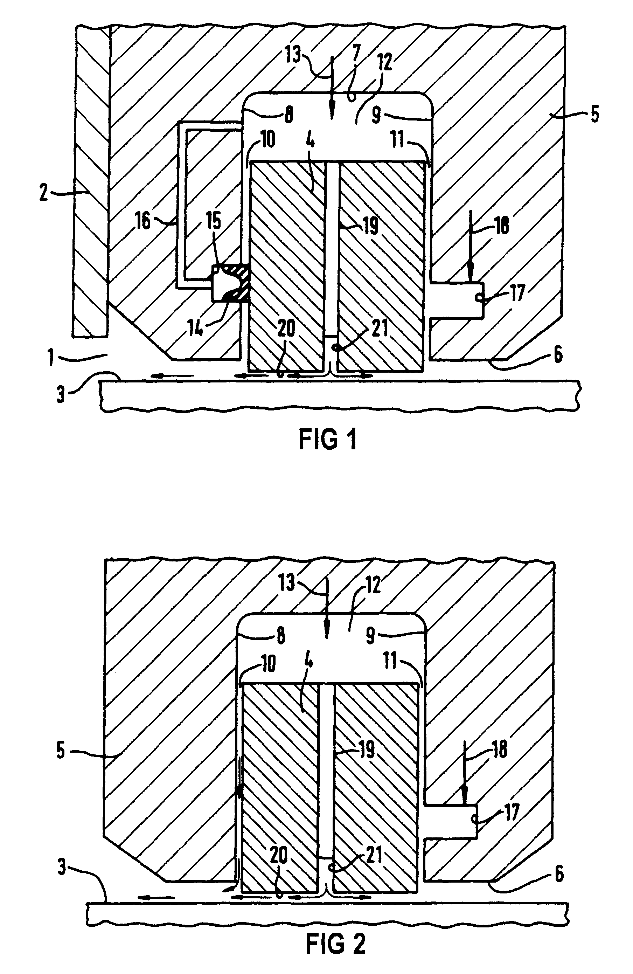

In den Figuren haben einander entsprechende Teile und Merkmale jeweils dieselben Bezugszeichen. Mehr oder weniger allgemein vorhandene Merkmale werden daher nachfolgend anhand der Figur 1 für alle weiteren Figuren abgehandelt.

Figur 1 zeigt eine Anordnung zur Abdichtung eines Durchführungsspaltes 1 zwischen einer Wand 2 und einer durch diese hindurchgeführten sowie relativ zu dieser in Rotation versetzbaren Welle 3. Die Anordnung umfaßt einen Dichtring 4, durch den die Welle 3 hindurchgeführt ist, sowie einen mit der Wand 2 fest verbundenen Halter 5. Der Halter 5 hat eine zylindrische Ausnehmung 6, durch welche die Welle 3 hindurchgeführt ist, und eine sich in diese Ausnehmung 6 eröffnende Nut 7. Diese Nut ist entlang der Welle 3 begrenzt von einer ersten Nutflanke 8 und einer zweiten Nutflanke 9, und zwischen diesen Nutflanken 8 und 9 ist der Dichtring 4 unter Belassung von jeweiligen Radialspalten 10 bzw. 11 gehaltert. Die Radialspalte 10,11 sind nicht maßstäblich, insbesondere vergrößert dargestellt. Dabei bleibt in der Nut 7 eine den Dichtring 4 umringende Kammer 12 frei. Die Kammer 12 ist über eine entsprechende Zufuhr 13, der Übersicht halber nur als Pfeil dargestellt, mit Öl befüllbar, und dieses Öl dringt bis zum Durchführungsspalt 1 vor, um diesen abzudichten. Die Wand 2 gehört zu einem Gehäuse eines mit Wasserstoff gefüllten Turbogenerators, und die Anordnung soll einen Abfluß von Wasserstoff durch den Durchführungsspalt 1 verhindern. Dies erfolgt unter Zuhilfenahme des Dichtrings 4 sowie des Öls, welches alle in der Anordnung verbliebenen Spalte ausfüllen soll. Das Öl reichert sich dabei, wie bereits erläutert, zum Teil allerdings mit Wasserstoff an, und der Wasserstoff muß wieder aus dem Öl entfernt werden. Dies bedeutet, daß entsprechender apparativer Aufwand betrieben werden muß, und dies bedeutet auch, daß mit einem gewissen Verlust von Wasserstoff gerechnet werden muß. Um diese Probleme zu beseitigen, kommt es also darauf an, den Zufluß von Öl in Richtung der Wand 2, wo das Öl sich mit Wasserstoff anreichern könnte, zu begrenzen, versteht sich unter Beibehaltung der Funktion des Dichtrings 4.

Aus der Kammer 12 dringt das Öl insbesondere in die Radialspalte 10 und 11 ein, wobei es durch den Radialspalt 10 an der ersten Nutflanke 8 in Richtung der Wand 2 fließen und mit Wasserstoff in Kontakt kommen könnte. Um dies zu verhindern, ist der Radialspalt 10 gegen einen Durchfluß von Öl aus der Kammer 12 gesperrt. Im Sinne der beschriebenen Ausführungsform ist dies bewerkstelligt dadurch, daß in dem Radialspalt 10 eine die Welle 3 umringende Ringdichtung 14 vorgesehen ist. Diese Ringdichtung 14 besteht beispielsweise aus Teflon oder gummielastischem Material bekannter Art, das gegen das Öl resistent ist. Die Ringdichtung 14 liegt in einer Ringnut 15 des Halters 5, welche über eine Stichleitung 16 mit der Kammer 12 kommuniziert. Das unter Druck stehende Öl in der Kammer 12 übt somit auf die Ringdichtung 14 einen Druck aus derart, daß die Ringdichtung 14 gegen den Dichtring 4 gepreßt wird und den Ringspalt 10 zuverlässig abdichtet.

In der zweiten Nutflanke 9, die dem Äußeren des Gehäuses und also der Luft zugewandt ist, befindet sich ebenfalls eine Ringnut 17. Dieser ist über eine Zufuhr 18, der Übersicht halber wiederum lediglich als Pfeil dargestellt, ebenfalls Öl zuführbar. Dieses Öl dient dazu, eine durch den unter Druck stehenden Wasserstoff entlang der Welle 3 auf den Dichtring 4 ausgeübte Kraft zu kompensieren und den Dichtring 4 kräftefrei in dem Halter 5 zu haltern. Derartig wird die Reibung des Dichtrings 5 an den Nutflanken 8 und 9 auf ein Minimum beschränkt und die Funktion des Dichtrings 4 gewährleistet.

Der Dichtring 4 enthält eine Leitung 19, durch die Öl aus der Kammer 12 zu einer der Welle 3 zugewandten Dichtfläche 20 des Dichtrings 4 leitbar ist. Derart bilden sich zwischen der Dichtfläche 20 und der Welle 3 zwei (durch Pfeile dargestellte) einander gegengerichtet fließende Ölströme aus, die zuverlässig verhindern, daß Wasserstoff oder Luft zwischen den Dichtring 4 und die Welle 3 eindringen kann. Zur gleichmäßigen Verteilung ist in der Dichtfläche eine Ringnut 21 vorgesehen, in welche die Leitung 19 einmündet.

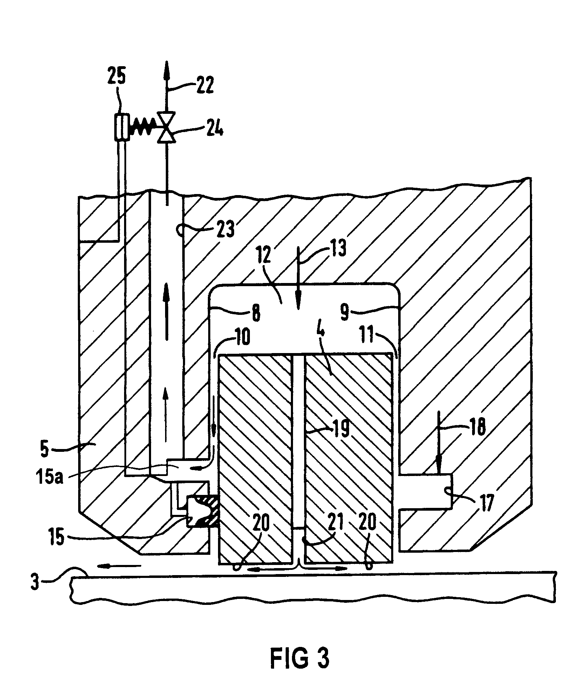

Figur 2 zeigt eine aus dem Stand der Technik bekannte Anordnung zur Abdichtung eines Durchführungsspaltes 1. Wie deutlich erkennbar, kann bei dieser Anordnung Öl aus der Kammer 12 ungehindert den Radialspalt 10 durchfließen und gelangt somit zusammen mit entlang der Dichtfläche 20 fließendem Öl zwischen die Welle 3 und den Halter 5 an derjenigen Seite, die dem Inneren des abgedichteten Gehäuses und damit dem Wasserstoff ausgesetzt ist. Es kommt somit zu einem hohen Anfall von mit Wasserstoff angereichertem Öl. Da die Anordnung nur einen einzigen Kreislauf für das Öl aufweist, muß das mit Wasserstoff angereicherte Öl letzten Endes zusammengeführt werden mit Öl, welches zur anderen Seite des Halters 5 geflossen ist und sich mit Luft angereichert hat. Durch Entgasen des Öls entsteht somit ein Gemisch aus Luft und Wasserstoff, welches relativ aufwendig aufgetrennt werden muß, wenn der Wasserstoff wiedergewonnen werden soll. Alternativ muß das Gasgemisch als Abgas entsorgt werden, was freilich unter Umständen Schwierigkeiten bei der Beachtung einschlägiger Vorschriften machen könnte. Selbstverständlich kann in dem Kreislauf für das Öl auch eine getrennte Führung und Entgasung des mit Wasserstoff angereicherten Öls vorgesehen sein; dies macht den Kreislauf allerdings recht kompliziert, behebt die anstehenden Probleme allerdings nur zum Teil, da auch aus diesem Öl Wasserstoff nicht in annehmbarer Reinheit extrahiert werden kann, ohne besonderen Aufwand zu treiben.

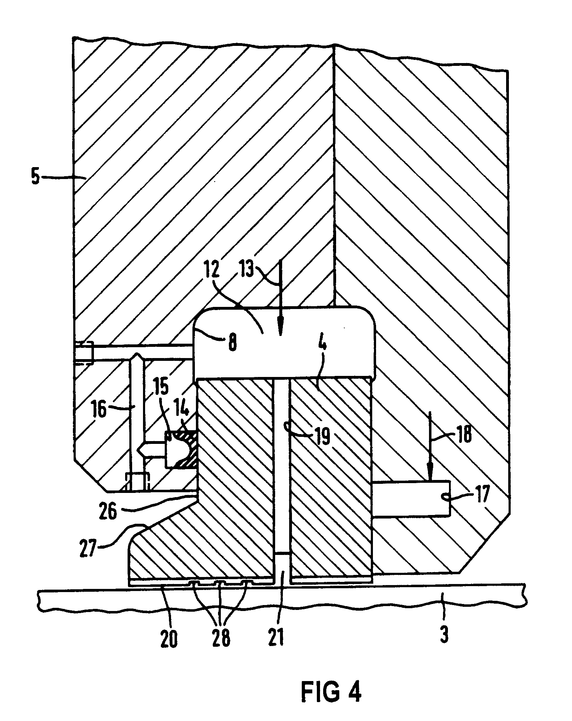

Figur 3 zeigt ein weiteres Ausführungsbeispiel der Erfindung. Bei dieser Ausführungsform ist der Radialspalt 10 an der ersten Nutflanke 8 gegen einen Durchfluß von Öl aus der Kammer 12 dadurch gesperrt, daß eine Ringnut 15a in der ersten Nutflanke 8, die in den Radialspalt 10 einmündet, an eine Abfuhr 22 zur Abführung von Öl angeschlossen ist. Zusätzlich ist wie bereits zu Figur 1 erläutert eine Ringdichtung 14 in eine Ringnut 15 vorgesehen. Wiederum ist die Abfuhr 22 der Übersicht halber lediglich als Pfeil dargestellt. Zu der Abfuhr 22 führt eine an die Ringnut 15a angeschlossene Leitung 23, und in diese Leitung 23 ist ein Steuerventil 24 eingefügt. Dieses Steuerventil 24 hat eine Steuerung 25, die einen Druck in der Ringnut 15 steuert in Abhängigkeit von einem Druck, der im Inneren des abgedichteten Gehäuses gemessen wird. Auf diese Weise ist sichergestellt, daß das in dem Radialspalt 10 eingedrungene Öl abgeführt wird.

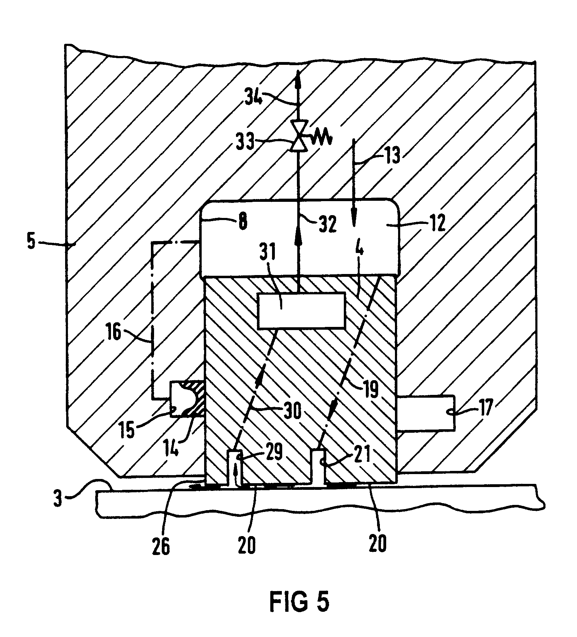

Figur 4 zeigt eine andere Weiterbildung der Anordnung, dargestellt im Zusammenhang mit der anhand der Figur 1 erläuterten Ausführungsform mit einer Ringdichtung 14 in einer Ringnut 15 der ersten Nutflanke 8. Wiederum führt eine Stichleitung 16 aus der Kammer 12 zur Ringnut 15. Dargestellt ist, wie diese Stichleitung 16 in den Halter 5 eingebracht werden kann; erforderlich dazu sind drei Bohrungen, von denen zwei aus dem Halter 5 herausführen und mit (nicht dargestellten) Schrauben verschlossen werden müssen. Der Halter 5 ist zweiteilig ausgeführt, was für seine Herstellung von Vorteil ist.

Eine Besonderheit der Ausführung gemäß Figur 4 liegt darin, daß der Dichtring 4 an einer Flanke 26, die unmmittelbar an der ersten Nutflanke 8 anliegt, einen Ringansatz 27 trägt, welcher die Dichtfläche 20 zwischen dem Dichtring 4 und der Welle 3 verlängert. Derart wird der Abfluß von Öl entlang der Dichtfläche 20 begrenzt, was den Anfall von mit Wasserstoff beladenem Öl weiter reduziert.

Als weitere Besonderheit trägt die Dichtfläche 20 zwischen der Ringnut 21 und der Flanke 26 eine schraubenförmig die Dichtfläche umlaufende Rille 28. Durch die rotierende Welle 3 erhält das in der Rille 28 befindliche Öl einen entlang der Welle 3 gerichteten Impuls, welcher bei entsprechender Orientierung der Rille 28 zur Ringnut 21 gerichtet ist und dementsprechend ebenfalls einen Abfluß von Öl entlang der Dichtfläche 20 begrenzt.

Figur 5 zeigt eine Ausführungsform, bei der es wiederum zwischen der ersten Nutflanke 8 und dem Dichtring 4 eine Ringdichtung 14 gibt, eingelegt in eine Ringnut 15 und mit Druck aus der Kammer 12 beaufschlagt durch die Stichleitung 16. Wiederum hat der Dichtring 4 in seiner der Welle 3 zugewandten Dichtfläche 20 eine Ringnut 21, die durch die Leitung 19 mit Öl aus der Kammer 12 beaufschlagt wird. Zusätzlich gibt es in der Dichtfläche 20 eine zweite Ringnut 29, welche zwischen der ersten Ringnut 21 und der der ersten Nutflanke 8 zugewandten Flanke 26 des Dichtrings 4 liegt. In diese zweite Ringnut 29 kann Öl, welches aus der Ringnut 21 entlang der Dichtfläche 20 geflossen ist, eintreten und wird aus der zweiten Ringnut 29 in eine, vorzugsweise ringförmige, Sammelkammer 31 im Dichtring 4 geführt. Aus der Sammelkammer 31 führt außerdem eine Leitung 32 durch die Kammer 12 hindurch und über ein Steuerventil 33 zu einer Abfuhr 34, die die Sammelkammer 31 mit einem gewissen Unterdruck beaufschlagt und somit für einen gewünschten Abtransport des Öls von der Dichtfläche 20 in die Sammelkammer 31 sorgt. Das in die Sammelkammer 31 geförderte Öl hat sich an der Dichtfläche 20 stark erwärmt, und es gibt diese Wärme aus der Sammelkammer 31 an den Dichtring 4 weiter. Hierdurch kann der Dichtring 4 sich ausdehnen und damit an einen durch thermische Beanspruchung veränderten Durchmesser der Welle 3 anpassen. Dies erlaubt es, den Dichtring 4 mit einer bisher nicht möglichen Präzision an die sich durch thermische Beanspruchung aufweitende Welle 3 anzupassen, wobei ein wesentlicher Vorteil darin liegt, daß der Dichtring 4 mit einem kleineren Spalt als bislang möglich der Welle 3 angepaßt werden kann, da er sich im Gleichlauf mit der Welle ausdehnen kann. Ein weiterer Vorteil der Anordnung gemäß Figur 5 liegt darin, daß sich der Dichtring 4 gleichmäßiger als bisher erwärmen kann; er neigt somit weniger als bisher zur Ausbildung mechanischer Spannungen aufgrund unterschiedlicher thermischer Ausdehnungen, was zur Erzielung einer großen Lebensdauer vorteilhaft ist. Bereits durch die Ausbildung eines sehr engen Spaltes zwischen Welle 3 und Dichtring 4 wird Ölfluß in Richtung der Wand 2 sehr klein gehalten, so daß eine Sperrung des Radialspaltes 10 je nach Anforderung auch entfallen kann.

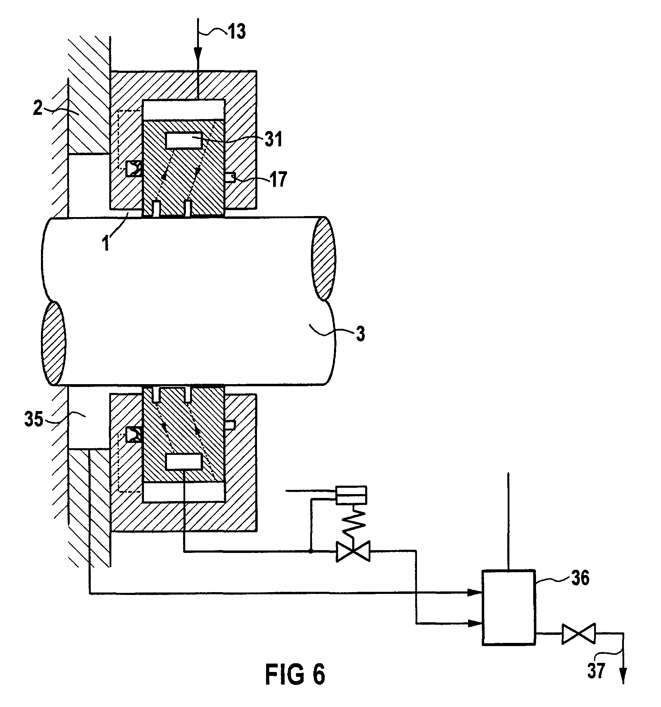

Figur 6 zeigt das Ausführungsbeispiel gemäß Figur 5 in größerem Zusammenhang. Hierbei ist durch den abzudichtenden Durchführungsspalt 1, den Halter 5 sowie die Wand 2 eine Vorkammer 35 gebildet, in die aus dem Dichtring 4 ausströmendes Öl, welches gegebenenfalls mit Wasserstoff belastet ist, herausgeführt wird. Dieses Öl wird mit dem in die Sammelkammer 31 einströmenden Öl in eine Gasentfernungseinrichtung 36 geführt. Das darin gereinigte Öl wird über eine Rückführung 37 in einen nicht dargestellten Ölbehälter zurückgeführt, von wo das Öl erneut über die Zufuhr 13 im Dichtring 4 zugeführt wird. Über ein zwischen der Reinigungseinrichtung 36 und der Sammelkammer 31 angeordnetes Steuerventil 33 erfolgt eine Einstellung der Aufteilung der in Richtung der Vorkammer 35 fließenden Teilmenge des Öls.

Alle dargestellten Anordnungen sind bestimmt zum Einsatz in Dichtsystemen 2, 3, 4, 5, 13, 17, 22, 34, die jeweils nur einen einzigen Kreislauf 13, 18, 19, 22, 23, 24, 30, 33, 34 für das Öl vorsehen. Dieser Kreislauf kann sich zwar verzweigen, zum Beispiel in die Zufuhren 13 und 18, er behandelt das Öl aber als eine Gesamtheit.

## Patentansprüche

1. Anordnung zur Abdichtung eines Durchführungsspaltes (1) zwischen einer Wand (2) und einer durch diese hindurchgeführten sowie relativ zu dieser in Rotation versetzbaren Welle (3), mit einem Dichtring (4), durch den die Welle (3) hindurchführbar ist, sowie einem mit der Wand (2) fest verbindbaren Halter (5) mit einer zylindrischen Ausnehmung (6) und einer sich in diese eröffnenden Nut (7) mit einer ersten Nutflanke (8) und einer zweiten Nutflanke (9), zwischen denen der Dichtring (4) gehaltert ist, wobei in der Nut (7) eine den Dichtring (4) umringende und mit Öl befüllbare Kammer (12) verbleibt, der Dichtring (4) zumindest eine Leitung (19) enthält, durch welche Öl aus der Kammer (12) zu einer der Welle (3) zuzuwendenden Dichtfläche (20) leitbar ist **dadurch gekennzeichnet, daß**
eine Ringdichtung (14) vorgesehen ist, welche in einer in die erste Nutflanke (8) eingelassenen Ringnut (15) gehaltert ist, und die Ringnut (15) über eine Stichleitung (16) mit der Kammer (12) kommuniziert.

2. Anordnung nach Anspruch 1, bei der die Ringdichtung (14) ein Material mit geringem Reibkoeffizienten, insbesondere Teflon, aufweist.

3. Anordnung zur Abdichtung eines Durchführungsspaltes (1) zwischen einer Wand (2) und einer durch diese hindurchgeführten sowie relativ zu dieser in Rotation versetzbaren Welle (3), mit einem Dichtring (4), durch den die Welle (3) hindurchführbar ist, sowie einem mit der Wand (2) fest verbindbaren Halter (5) mit einer zylindrischen Ausnehmung (6) und einer sich in diese eröffnenden Nut (7) mit einer ersten Nutflanke (8) und einer zweiten Nutflanke (9), zwischen denen der Dichtring (4) gehaltert ist, wobei in der Nut (7) eine den Dichtring (4) umringende und mit Öl befüllbare Kammer (12) verbleibt, der Dichtring (4) zumindest eine Leitung (19) enthält, durch welche Öl aus der Kammer (12) zu einer der Welle (3) zuzuwendenden Dichtfläche (20) leitbar ist **dadurch gekennzeichnet, daß** der Dichtring (4) zwischen der Leitung (19) und einer der ersten Nutflanke (8) unmittelbar zugewandten Flanke (26) eine mit der Dichtfläche (20) verbundene Ableitung (30) sowie eine Sammelkammer (31) enthält, wobei die Sammelkammer (31) aus der Ableitung (30) mit Öl beaufschlagbar ist.

4. Anordnung nach Anspruch 3, bei der der Dichtring (4) in der Dichtfläche (20) eine zweite Ringnut (29) aufweist, in welche die Ableitung (30) einmündet.

5. Anordnung nach Anspruch 3 oder 4, mit einer an die Sammelkammer (31) anschließbare Abfuhr (34) für das Öl.

6. Anordnung nach einem der vorhergehenden Ansprüche, bei der der Dichtring (4) in der Dichtfläche (20) eine erste Ringnut (21) aufweist, in welche die Leitung (19) einmündet.

7. Anordnung nach Anspruch 6, bei der die Dichtfläche (20) zwischen der Ringnut (21) und einer Flanke (26) des Dichtrings, die unmittelbar an der ersten Nutflanke (8) anliegt, eine schraubenförmig die Dichtfläche (20) umlaufende Rille (28) aufweist.

8. Anordnung nach einem der vorigen Ansprüche, bei der der Dichtring (4) an einer Flanke (26), die unmittelbar an der ersten Nutflanke (8) anliegt, einen die Dichtfläche (20) verlängernden Ringansatz (27) trägt.

9. Anordnung nach einem der vorigen Ansprüche, bei der die zweite Nutflanke (9) eine mit Öl beaufschlagbare Ringnut (17) aufweist.

10. Anordnung nach einem der vorhergehenden Ansprüche, bei der die erste Nutflanke (8) eine Ringnut (15) aufweist, an die eine Abfuhr (22) zur Abführung von Öl aus dem Radialspalt (10) anschließbar ist.

11. Verwendung der Anordnung nach einem der vorigen Ansprüche in einem Dichtsystem (2,3,4,5,13,17,22,34) an einer elektrischen Maschine (2), insbesondere einem mit Wasserstoff gefüllten Turbogenerator (2).

12. Verwendung nach Anspruch 11, bei der das Dichtsystem (2, 3, 4, 5, 13, 17, 22, 34) einen einzigen Kreislauf (13, 18, 19, 22, 23, 24, 30, 32, 33, 34) für das Öl hat.

## Claims

1. Arrangement for sealing a leadthrough gap (1) between a wall (2) and a shaft (3) which is passed through this wall (2) and can be set in rotation relative to the latter, having a sealing ring (4) through which the shaft (3) can be passed as well as a holder (5) which can be firmly connected to the wall (2) and has a cylindrical recess (6) and a groove (7) opening into the latter and having a first groove flank (8) and a second groove flank (9), between which the sealing ring (4) is held, a chamber (12) which surrounds the sealing ring (4) and can be filled with oil remaining in the groove (7), and the sealing ring (4) containing at least one line (19) through which oil can be directed out of the chamber (12) to a sealing surface (20) to be turned towards the shaft (3), **characterized in that** an annular seal (14) is provided which is held in an annular groove (15) made in the first groove flank (8), and the annular groove (15) communicates with the chamber (12) via a branch line (16).

2. Arrangement according to Claim 1, in which the annular seal (14) has a material having a low coefficient of friction, in particlar Teflon.

3. Arrangement for sealing a leadthrough gap (1) between a wall (2) and a shaft (3) which is passed through this wall (2) and can be set in rotation relative to the latter, having a sealing ring (4) through which the shaft (3) can be passed as well as a holder (5) which can be firmly connected to the wall (2) and has a cylindrical recess (6) and a groove (7) opening into the latter and having a first groove flank (8) and a second groove flank (9), between which the sealing ring (4) is held, a chamber (12) which surrounds the sealing ring (4) and can be filled with oil remaining in the groove (7), and the sealing ring (4) containing at least one line (19) through which oil can be directed out of the chamber (12) to a sealing surface (20) to be turned towards the shaft (3), **characterized in that** the sealing ring (4), between the line (19) and a flank (26) directly facing the first groove flank (8), contains a discharge line (30) connected to the sealing surface (20) and also contains a collecting chamber (31), in which case oil can be admitted to the collecting chamber (31) from the discharge line (30).

4. Arrangement according to Claim 3, in which the sealing ring (4) has a second annular groove (29) in the sealing surface (20), into which second annular groove (29) the discharge line (30) leads.

5. Arrangement according to Claim 3 or 4, having a discharge (34) for the oil, which discharge (34) can be connected to the collecting chamber (31).

6. Arrangement according to one of the preceding claims, in which the sealing ring (4) has a first annular groove (21) in the sealing surface (20), into which first annular groove (21) the line (19) leads.

7. Arrangement according to Claim 6, in which the sealing surface (20) has a channel (28) helically encircling it between the annular groove (21) and a flank (26) of the sealing ring, which flank (26) bears directly against the first groove flank (8).

8. Arrangement according to one of the preceding claims, in which the sealing ring (4) has an annular extension (27) on a flank (26) which bears directly against the first groove flank (8), which annular extension (27) extends the sealing surface (20).

9. Arrangement according to one of the preceding claims, in which the second groove flank (9) has an annular groove (17) to which oil can be admitted.

10. Arrangement according to one of the preceding claims, in which the first groove flank (8) has an annular groove (15) to which a discharge (22) for discharging oil from the radial gap (10) can be connected.

11. Use of the arrangement according to one of the preceding claims in a sealing system (2, 3, 4, 5, 13, 17, 22, 34) on an electrical machine, in particular a turbogenerator (2) filled with hydrogen.

12. Use according to Claim 11, in which the sealing system (2, 3, 4, 5, 13, 17, 22, 34) has a single circuit (13, 18, 19, 22, 23, 24, 30, 32, 33, 34) for the oil.

## Revendications

1. Dispositif pour rendre étanche une fente (1) de passage entre une paroi (2) et un arbre (3) qui y passe et qui peut être mis en rotation par rapport à celle-ci, comportant un joint (4) torique dans lequel passe l'arbre (3), ainsi qu'un dispositif (5) de maintien qui est relié de manière fixe à la paroi (2) et qui comporte un évidement (6) cylindrique et une rainure (7) qui s'y ouvre et qui comporte un premier flanc (8) de rainure et un deuxième flanc (9) de rainure entre lesquels le joint (4) torique est fixé, en laissant dans la rainure (7) une chambre (12) entourant le joint (4) torique et pouvant être remplie d'huile, le joint (4) torique comportant au moins une conduite (19) par laquelle de l'huile peut passer de la chambre (12) à une surface (20) d'étanchéité tournée vers l'arbre (3), **caractérisé en ce qu'**il est prévu un dispositif (14) d'étanchéité annulaire qui est fixé dans une rainure (15) annulaire ménagée dans le premier flanc (8) de rainure et **en ce que** la rainure (15) annulaire communique par l'intermédiaire d'une conduite (16) de dérivation avec la chambre (12).

2. Dispositif suivant la revendication 1, dans lequel le dispositif (14) d'étanchéité annulaire comporte un matériau à petit coefficient de frottement, notamment du Téflon.

3. Dispositif pour rendre étanche une fente (1) de passage entre une paroi (2) et un arbre (3) qui y passe et qui peut être mis en rotation par rapport à celle-ci, comportant un joint (4) torique dans lequel passe l'arbre (3), ainsi qu'un dispositif (5) de maintien qui est relié de manière fixe à la paroi (2) et qui comporte un évidement (6) cylindrique et une rainure (7) qui s'y ouvre et qui comporte un premier flanc (8) de rainure et un deuxième flanc (9) de rainure entre lesquels le joint (4) torique est fixé, en laissant dans la rainure (7) une chambre (12) entourant le joint (4) torique et pouvant être remplie d'huile, le joint (4) torique comportant au moins une conduite (19) par laquelle de l'huile peut passer de la chambre (12) à une surface (20) d'étanchéité tournée vers l'arbre (3), **caractérisé en ce que** le joint (4) d'étanchéité comporte entre la conduite (19) et un flanc (26) tourné directement vers le premier flanc (8) de rainure une conduite (30) d'évacuation communiquant avec la surface (20) d'étanchéité ainsi qu'une chambre (31) de collecte, la chambre (31) de collecte pouvant être alimentée en huile par la conduite (30) d'évacuation.

4. Dispositif suivant la revendication 3, dans lequel le joint (4) torique comporte dans la surface (20) d'étanchéité une deuxième rainure (29) annulaire dans laquelle débouche la conduite (30) d'évacuation.

5. Dispositif suivant la revendication 3 ou 4, comportant une évacuation (34) pour l'huile pouvant être raccordée à la chambre (31) de collecte.

6. Dispositif suivant l'une des revendications précédentes, dans lequel le joint (4) torique comporte dans la surface (20) d'étanchéité une première rainure (21) annulaire dans laquelle débouche la conduite (19).

7. Dispositif suivant la revendication 6, dans lequel la surface (20) d'étanchéité comporte entre la rainure (21) et un flanc (26) du joint torique qui s'applique directement au premier flanc (8) de rainure une gorge (28) entourant en hélice la surface (20) d'étanchéité.

8. Dispositif suivant l'une des revendications précédentes, dans lequel le joint (4) torique porte sur un flanc (26) qui s'applique directement au premier flanc (8) de rainure un prolongement (27) annulaire prolongeant la surface (20) d'étanchéité.

9. Dispositif suivant l'une des revendications précédentes, dans lequel le deuxième flanc (9) de rainure comporte une rainure (17) annulaire pouvant être alimentée en huile.

10. Dispositif suivant l'une des revendications précédentes, dans lequel le premier flanc (8) de rainure comporte une rainure (15) annulaire à laquelle peut être raccordée une évacuation (22) pour l'évacuation d'huile de la fente (10) radiale.

11. Utilisation du dispositif suivant l'une des revendications précédentes dans un système (2, 3, 4, 5, 13, 17, 22, 34) d'étanchéité sur une machine (2) électrique, notamment une turbogénératrice (2) remplie d'hydrogène.

12. Utilisation suivant la revendication 11, dans laquelle le système (2, 3, 4, 5, 13, 17, 22, 34) d'étanchéité n'a qu'un seul circuit (13, 18, 19, 22, 23, 24, 30, 32, 33, 34) pour l'huile.
